# EUROPÄISCHE PATENTSCHRIFT

(11) **EP 0 877 332 B1**
(45) Veröffentlichungstag und Bekanntmachung des Hinweises auf die Patenterteilung: **28.02.2001**
(21) Anmeldenummer: 98107689.6
(22) Anmeldetag: 28.04.1998
(51) Int. Cl.: G06K 7/00

(54) **Chipkartenleser**
IC card reader
Lecteur de cartes à puce

(30) Priorität: 06.05.1997 DE 19719003
(43) Veröffentlichungstag der Anmeldung: 11.11.1998
(73) Patentinhaber: ddm hopt + schuler GmbH & Co. KG., D-78628 Rottweil (DE)
(72) Erfinder: Hopt, Jürgen, 78628 Rottweil (DE)
(74) Vertreter: KOHLER SCHMID + PARTNER

(56) Entgegenhaltungen:
- EP-A- 0 696 010
- DE-A- 3 931 508
- GB-A- 2 298 743

## Beschreibung

Die Erfindung betrifft einen Kartenleser zum Datenaustausch mit Karten, welche einen integrierten Schaltkreis tragen, mit zwei Datenaustauscheinheiten für zwei in den Kartenleser einführbare Karten, wobei die zweite Karte in ihre Datenaustauschstellung durch die zuvor in ihre Datenaustauschstellung eingeführte erste Karte geführt, vorzugsweise kraftbeaufschlagt ist und wobei die erste Datenaustauscheinheit für die erste Karte in Einführrichtung der Karten hinter der zweiten Datenaustauscheinheit für die zweite Karte angeordnet ist und die zweite Datenaustauscheinheit Kontaktfedern aufweist, die in den für beide Karten vorgesehenen Einführschlitz hineinragen und die beim Einführen der zweiten Karte über diese und ihre Kontaktfelder schleifen.

Ein derartiger Kartenleser ist beispielsweise durch die GB-A-2 298 743 bekanntgeworden.

Bei dem aus der GB-A-2 298 743 bekannten Kartenleser sind nach dem in den Figuren 4 bis 6 gezeigten Ausführungsbeispiel zwei in Karteneinschubrichtung hintereinander angeordnete Datenaustauscheinheiten in Form von Kontaktfedern vorgesehen. Diese Kontaktfedern werden beim Einführen der jeweiligen Karte aus der Kartenbahn ausgelenkt und reiben auf der Kartenoberfläche und insbesondere auf den Kontaktflächen der Karte. Diese Reibung führt im Lauf der Zeit auf den Kontaktflächen der Karte zu sichtbaren Oberflächenveränderungen (Schleifspuren), die den elektrischen Kontakt zwischen den Kontaktflächen und den Kontaktfedern des Kartenlesers beeinträchtigen können.

Meist dient die weiter in den Kartenleser eingeschobene erste Karte als Berechtigungskarte, die in den Kartenleser eingeschoben wird, um eine zweite Karte lesen zu können, und die auch eingeschoben bleibt, um mehrere zweite Karten nacheinander lesen zu können.

Es ist deshalb die Aufgabe der vorliegenden Erfindung, einen Kartenleser der eingangs genannten Art dahingehend weiterzubilden, daß zumindest bei der eingeschobenen ersten Karte die Beanspruchung ihrer Kontaktflächen möglichst verringert ist.

Diese Aufgabe wird erfindungsgemäß dadurch gelöst, daß die erste Datenaustauscheinheit einen in Einführrichtung verschiebbaren und in Richtung auf Kontaktfedern der ersten Datenaustauscheinheit absenkbaren Führungsschlitten aufweist, um die erste Karte zum Datenaustausch auf die Kontaktfedern abzusenken.

Erfindungsgemäß sind in einem Kartenleser zwei verschiedene Datenaustauscheinheiten hintereinander angeordnet. Die erste Karte, im oben genannten Anwendungsfall die Berechtigungskarte, wird mit Hilfe des Führungsschlittens so auf die Kontakfedern hingeführt, daß diese ohne oder mit wenig Reibung kontaktiert werden. Die zweite Karte, im oben genanten Fall die nur bei einem Arztbesuch zu lesende Patientenkarte, wird über auf der Karte schleifende Kontaktfedern kontaktiert. Dem Arzt ist so nach Einführen seiner Berechtigungskarte aufgrund deren Anwesenheit und gespeicherten Berechtigungsdaten möglich, auch die Daten von der ebenfalls eingeführten Patientenkarte auszulesen.

In einer vorteilhaften Ausführungsform kann die Höhe des Einführschlitzes auf die gemeinsame Kartenstärke der beiden Karten elastisch aufweitbar sein. Durch Einführen der zweiten Karte wird der Einführschlitz dann elastisch aufgeweitet, wodurch die zweite Karte in ihre Datenaustauschstellung bzw. in Richtung auf ihre Datenaustauscheinheit vorgespannt werden kann.

Als besondere Ausgestaltung dieser Weiterbildung kann zum Einführen der ersten Karte in den in seiner Höhe verringerten Einführschlitz mindestens eine Einführschräge, vorzugsweise zwei Einführschrägen, vorgesehen sein.

Bei bevorzugten Ausführungsformen der Erfindung weist jede Datenaustauscheinheit einen Karten-Anwesenheitssensor auf, mit dem das Einführen einer Karte in ihre Datenaustauschstellung erfaßt bzw. erkannt werden kann.

Es versteht sich, daß bei entsprechendem Bedarf auch noch weitere Datenaustausch- bzw. Leseeinheiten vorgesehen sein können, um dann z.B. drei oder vier Karten, wie oben beschrieben, in den Kartenleser einführen und in Abhängigkeit ihrer jeweiligen Anwesenheit und Berechtigung einen Datenaustausch vornehmen zu können.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: einen schematischen Längsschnitt durch einen erfindungsgemäßen Kartenleser;
- Fig. 2: den Kartenleser der Fig. 1 mit einer ersten bis in ihre Lesestellung eingeführten Chipkarte;
- Fig. 3: den Kartenleser der Fig. 1, wobei unterhalb der ersten Chipkarte eine zweite Chipkarte bis in ihre Lesestellung eingeführt ist;
- Fig. 4: eine Draufsicht von oben auf den erfindungsgemäßen Kartenleser; und
- Fig. 5: eine Vorderansicht des erfindungsgemäßen Kartenlesers, gesehen in Einführrichtung der ersten und zweiten Karte.

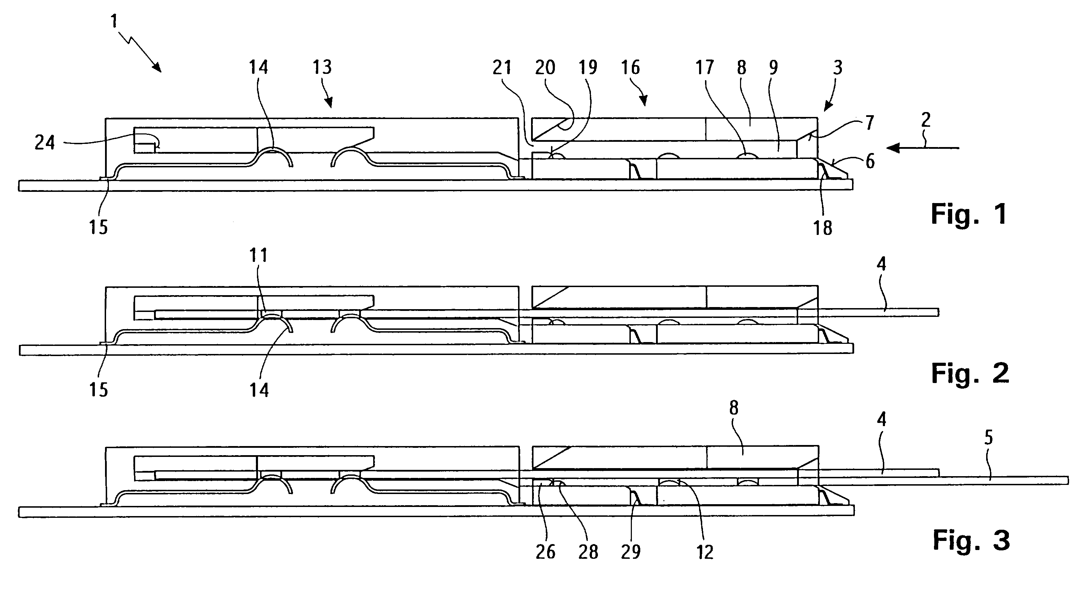

In Fig. 1 ist mit dem Bezugszeichen 1 ein Kartenleser bezeichnet, in den in Einführrichtung 2 über ein Mundstück 3 zwei im folgenden als Chipkarten bezeichnete Karten 4 und 5 (Fign. 2 und 3) eingeführt werden können.

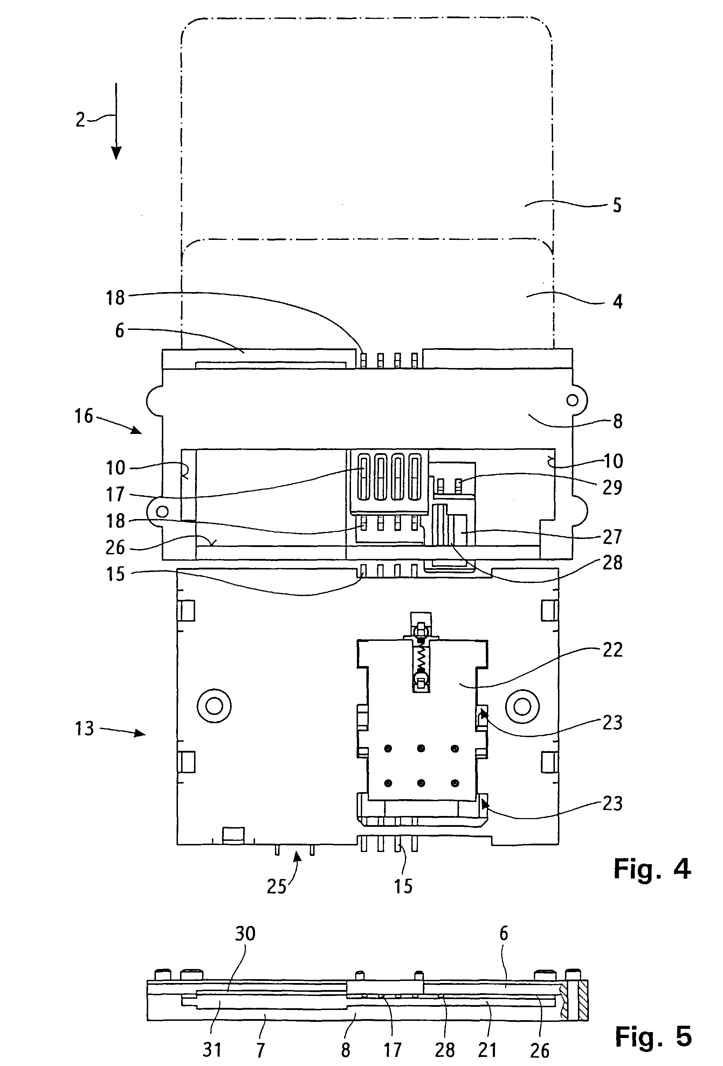

Am Mundstück 3 sind zum leichteren Einführen der beiden Karten 4, 5 eine untere und eine obere Einführschräge 6, 7 vorgesehen, die in einen Einführschlitz 9 münden. Die Höhe des Einführschlitzes 9 entspricht der gemeinsamen Stärke der beiden Chipkarten 4, 5, wobei aufgrund eines den Einführschlitz 9 nach oben begrenzenden elastischen Übergreifbügels 8 die Höhe des Einführschlitzes 9 auch etwas geringer als die gemeinsame Stärke der beiden Chipkarten 4, 5 gewählt sein kann. Im Kartenleser 1 selbst sind die beiden Chipkarten 4, 5 über seitliche Führungen 10 (Fig. 4) geführt.

Die Chipkarten 4, 5 tragen jeweils einen integrierten Schaltkreis (nicht dargestellt), wobei freiliegende Kontaktflächen 11, 12 auf der Chipkarte 4, 5 jeweils den Informationsaustausch mit dem integrierten Schaltkreis erlauben. Zum Kontaktieren der Kontaktflächen 11 der ersten Chipkarte 4 ist im Kartenleser 1 eine erste (hintere) Leseeinheit 13 mit Kontaktfedern 14 vorgesehen, die die Kontaktflächen 11 der ersten Chipkarte 4 kontaktieren können und über Kontaktanschlüsse 15 mit entsprechender Elektronik verbindbar sind. Entsprechend ist zum Kontaktieren der zweiten Chipkarte 5 im Kartenleser 1 eine zweite (vordere) Leseeinheit 16 mit Kontaktfedern 17 vorgesehen, über die die Kontaktflächen 12 der zweiten Karte 5 elektrisch kontaktiert werden können und die mit Kontaktanschlüssen 18 verbunden sind.

Der Kartenleser 1 ermöglicht den Informationsaustausch mit der zweiten Chipkarte 5 nur dann, wenn die erste Chipkarte 4 bereits in ihre Lesestellung eingeschoben ist. Dazu wird die erste Chipkarte 4 in Einführrichtung 2 über das Mundstück 3 in den Einführschlitz 9, welcher innerhalb der vorderen Leseeinheit 16 vorgesehen ist, bis in die erste Leseeinheit 13 eingeschoben. Dabei wird die Chipkarte 4 innerhalb der zweiten Leseeinheit 16 über eine untere und obere Einführschräge 19, 20 in einen schmaleren Einführschlitz 21 eingeführt, dessen Höhe etwa der Kartenstärke der ersten Chipkarte 4 entspricht. Die erste Chipkarte 4 wird beim weiteren Einschieben mit Hilfe eines in Einführrichtung 2 verschiebbaren und in Richtung auf die Kontaktfedern 14 absenkbaren Führungsschlittens 22 (Fig. 4), der in seitlichen Führungen 23 geführt ist, auf die Kontaktfedern 14 abgesenkt, bis die Chipkarte 4 in ihrer Lesestellung an einem hinteren Anschlag 24 des Kartenlesers 1 anschlägt.

Nachdem die erste Chipkarte 4 in ihre Lesestellung (Fig. 2) eingeschoben ist, wird die zweite Chipkarte 5 unterhalb der ersten Chipkarte 4 über das Mundstück 3 in Einführrichtung 2 in den Kartenleser 1 eingeschoben, wobei sie zwischen unterer Einführschräge 6 und der ersten Chipkarte 4 in den verbliebenen Einführschlitz 9 in der vorderen Leseeinheit 16 eingeschoben wird. Die zweite Chipkarte 5 erreicht ihre Lesestellung, wenn sie an einem hinteren Anschlag 26 in der vorderen Leseeinheit 16 anschlägt. Wenn die Höhe des Einführschlitzes 9 geringer als die gemeinsame Kartenstärke beider Chipkarten 4, 5 ist, wird die zweite Karte 5 durch den elastischen Übergreifbügel 8 in Richtung auf ihre Kontaktfedern 17 angedrückt. Auch dadurch, daß die erste Karte 4 im Bereich der vorderen Leseeinheit 16 in Einführrichtung 2 schräg nach unten auf ihre Kontaktfedern 14 geführt ist, kann der Einführschlitz 9 in Einführrichtung 2 verengt und so die zweite Karte 5 auf ihre Kontaktfedern 17 kraftbeaufschlagt werden.

Ein hinterer Anwesenheitssensor 25 (Fig. 4) wird ausgelöst, wenn die erste Chipkarte 4 bis in ihre Lesestellung eingeschoben ist. Entsprechend wird ein für die zweite Chipkarte 5 vorgesehener vorderer Anwesenheitssensor 27 betätigt, wenn die zweite Chipkarte 5 bis in ihre Lesestellung eingeschoben ist. Wie Fig. 4 zeigt, ist dieser vordere Anwesenheitssensor 27 für die zweite Chipkarte 5 (und entsprechend der hintere Anwesenheitssensor 25 für die erste Chipkarte 4) durch zwei Kontaktfedern 28 gebildet, von denen eine in die Bewegungsbahn der zweiten Chipkarte 5 hineinragt. Durch Einschieben der zweiten Chipkarte 5 wird diese eine Kontaktfeder 28 aus der Bewegungsbahn gedrängt und kontaktiert dadurch die andere Kontaktfeder 28.

Wie die Vorderansicht des Kartenlesers 1 in Fig. 5 zeigt, sind im Übergreifbügel 8 sowie in der unteren Einführschräge 6 bzw. in einem Boden des vorderen Kartenlesers 16 jeweils Aussparungen 30 bzw. 31 vorgesehen, um eine Beeinträchtigung des Einführvorgangs durch erhabene Prägungen auf der Oberfläche der beiden Chipkarten 4, 5 zu verhindern.

Wird dagegen die zweite Karte 5 eingeführt, wenn die erste Karte 4 nicht zuvor in den Kartenleser 1 eingeführt worden ist, so wird die zweite Karte 5 bis in die Datenaustauschstellung für die erste Karte 4, d.h. in die Leseeinheit 13, in den Kartenleser 1 eingeführt. Wenn diese als erste Karte eingeführte zweite Karte 5 keine entsprechenden Berechtigungsdaten enthält, kann eine danach in den Kartenleser 1 eingeführte Karte mit der vorderen Leseeinheit 16 nicht gelesen werden.

## Patentansprüche

1. Kartenleser (1) zum Datenaustausch mit Karten (4, 5), welche einen integrierten Schaltkreis tragen, mit zwei Datenaustauscheinheiten (13, 16) für zwei in den Kartenleser (1) einführbare Karten (4, 5), wobei die zweite Karte (5) in ihre Datenaustauschstellung durch die zuvor in ihre Datenaustauschstellung eingeführte erste Karte (4) geführt, vorzugsweise kraftbeaufschlagt ist und wobei die erste Datenaustauscheinheit (13) für die erste Karte (4) in Einführrichtung (2) der Karten (4, 5) hinter der zweiten Datenaustauscheinheit (16) für die zweite Karte (4) angeordnet ist und die zweite Datenaustauscheinheit (16) Kontaktfedern (17) aufweist, die in den für beide Karten (4, 5) vorgesehenen Einführschlitz (9) hineinragen und die beim Einführen der zweiten Karte (5) über diese und ihre Kontaktfelder (12) schleifen,
dadurch gekennzeichnet,
daß die erste Datenaustauscheinheit (13) einen in Einführrichtung (2) verschiebbaren und in Richtung auf Kontaktfedern (14) der ersten Datenaustauscheinheit (13) absenkbaren Führungsschlitten (22) aufweist, um die erste Karte (4) zum Datenaustausch auf die Kontaktfedern (14) abzusenken.

2. Kartenleser nach Anspruch 1, dadurch gekennzeichnet, daß die Höhe des für beide Karten (4, 5) gemeinsamen Einführschlitzes (9) auf die gemeinsame Kartenstärke der beiden Karten (4, 5) elastisch aufweitbar ist.

3. Kartenleser nach Anspruch 1 oder 2, dadurch gekennzeichnet, daß zum Einführen der ersten Karte (4) in den in seiner Höhe verringerten Einführschlitz (21) mindestens eine Einführschräge (19, 20) vorgesehen ist.

4. Kartenleser nach einem der vorhergehenden Ansprüche, dadurch gekennzeichnet, daß jede Datenaustauscheinheit (13, 16) einen Karten-Anwesenheitssensor (25, 27) aufweist.

## Claims

1. Card reader (1) for data exchange with cards (4,5) which carry an integrated circuit, having two data exchange units (13,16) for two cards (4,5) which can be inserted into the card reader (1), wherein the second card (5) is guided, preferably power biased, into its data exchange position by the first card (4) previously introduced into its data exchange position, and wherein the first data exchange unit (13) for the first card (4) is disposed in the introducing direction (2) of the cards (4,5) behind the second data exchange unit (16) for the second card (4) and the second data exchange unit (16) comprises contact springs (17) protruding into the insertion slot (9) provided for both cards (4,5) and which, when the second card (5) is being introduced, slide over same and its contact fields (12),
characterized in that the first data exchange unit (13) comprises a sliding carriage (22) which can be displaced in the insertion direction (2) and can be lowered towards contact springs (14) of the first data exchange unit (13) for lowering the first card (4) onto the contact springs (14) for the data exchange.

2. Card reader according to claim 1, characterized in that the height of the insertion slot (9) common to both cards (4,5) can be elastically widened to the card thickness of both cards (4,5) together.

3. Card reader according to claim 1 or 2, characterized in that for introducing the first card (4) into the insertion slot (21) reduced in height, at least one introduction slope (19,20) is provided.

4. Card reader according to any one of the preceding claims, characterized in that each data exchange unit (13,16) comprises a card presence sensor (25,27).

## Revendications

1. Lecteur de cartes (1) destiné à échanger des données avec des cartes (4, 5), qui portent un circuit intégré, comportant deux unités (13, 16) d'échange de données pour deux cartes (4, 5) pouvant être introduites dans le lecteur de cartes (1), et dans lequel lorsque la seconde carte (5) est dans sa position d'échange de données, elle est guidée, et de préférence chargée par une force, par la première carte (4) introduite auparavant dans sa position d'échange de données, et dans lequel la première unité (13) d'échange de données pour la première carte (4) est disposée en arrière de la seconde unité (16) d'échange de données pour la seconde carte (5), dans la direction d'introduction (2) des cartes (4, 5), et la seconde unité (16) d'échange de données comporte des ressorts de contact (17), qui pénètrent dans la fente d'introduction (9) prévue pour les deux cartes (4, 5) et qui, lors de l'introduction de la seconde carte (5), glissent au-dessus de cette dernière et de ses ressorts de contact (12),
caractérisé en ce que
la première unité (13) d'échange de données comporte un curseur de guidage (22), qui est déplaçable dans la direction d'introduction (2) et peut être abaissé en direction des ressorts de contact (14) de la première unité (13) d'échange de données, pour abaisser la carte (4), pour l'échange de données, sur les ressorts de contact (14).

2. Lecteur de cartes selon la revendication 1, caractérisé en ce que la hauteur de la fente d'introduction (9) commune pour les deux cartes (4, 5) peut être augmentée, de façon élastique, à une valeur égale à l'épaisseur conjointe des deux cartes (4, 5).

3. Lecteur de cartes selon la revendication 1 ou 2, caractérisé en ce que pour l'introduction de la première carte (4) dans la fente d'introduction (21) dont la hauteur est réduite, il est prévu au moins un biseau d'introduction (19, 20).

4. Lecteur de cartes selon l'une des revendications précédentes, caractérisé en ce que chaque unité (13, 16) d'échange de données possède un capteur (25, 27) de la présence d'une carte.
